# EUROPÄISCHE PATENTANMELDUNG

(11) **EP 0 531 681 A2**
(43) Veröffentlichungstag der Anmeldung: **17.03.1993**
(21) Anmeldenummer: 92112624.9
(22) Anmeldetag: 23.07.1992
(51) Int. Cl.: B29C 65/20, E06B 3/96

(54) **Vorrichtung zum Verschweissen von Profilen aus Kunststoff**

(30) Priorität: 07.09.1991 DE 9111119 U
(71) Anmelder: KOMMANDITGESELLSCHAFT HASSOMAT MASCHINENBAU GmbH & Co., D-22047 Hamburg (DE)
(72) Erfinder: Meyer, Klaus, W-2000 Hamburg 73 (DE)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Vorrichtung zum Verschweißen von Profilen (50) aus Kunststoff, insbesondere für Fensterrahmen, mit vier Schweißaggregaten (20,22,26,28), von denen jeweils zwei auf einem von zwei parallelen Aggregatträgern angeordnet sind, wobei jeweils ein Aggregat eines Paares relativ zum anderen auf dem Aggregatträger verstellbar ist und ein Aggregatträger (18) relativ zum anderen Aggregatträger (16) verstellbar ist, wobei ferner jedes Aggregat zwei Auflagen, zwei Konterprofile und zwei Druckplatten für die Enden der jeweils eingelegten Profile aufweist, die mittels eines Vorschubschlittens relativ zueinander verstellbar sind, wobei an jedem Aggregat ein Druckstempel (118) vorgesehen ist, der mittels einer Verstellvorrichtung gegen den zu verschweißenden Eckbereich von aneinanderstoßenden Lippendichtungen an der Innenseite der Profile andrückbar ist.

## Beschreibung

Die Erfindung bezieht sich auf eine Vorrichtung zum Verschweißen von Profilen aus Kunststoff, insbesondere für Fensterrahmen nach dem Oberbegriff des Anspruchs 1.

Fensterrahmen aus Kunststoffprofilen sind bekannt. Die Kunststoffprofile werden als Hohlprofile im Strangpreßverfahren hergestellt und auf Gehrung geschnitten. Sie werden anschließend zur Bildung des Rahmens miteinander verschweißt. Es ist bekannt, derartige Kunststoffprofile mit Hilfe einer automatischen Vorrichtung zu verschweißen. Die bekannten Vorrichtungen weisen in der Regel vier Schweißaggregate auf, von denen jeweils zwei auf einem von zwei parallelen Aggregatträgern angeordnet sind. Die Aggregatträger weisen Führungen auf, auf denen mindestens ein Schweißaggregat verstellt werden kann. Ein Aggregatträger ist normalerweise als Schlitten ausgeführt und kann mit Hilfe von maschinenfesten Führungen relativ zum anderen Aggregatträger verstellt werden. Die Verstellung der Aggregate und des Aggregatträgers erfolgt in bekannter herkömmlicher Weise.

Fensterrahmen aus Kunststoffprofilen weisen üblicherweise eine innere Lippendichtung auf, gegen die die Glasscheibe zur Anlage kommt. Aus Fertigungsgründen werden derartige Lippendichtungen mit den zu verschweißenden Kunststoffprofilen verbunden, so daß beim Verschweißen der Kunststoffprofile die Lippendichtungen ebenfalls verschweißt werden. Im Stoßbereich bildet sich dabei ein Wulst aus, der in seiner Höhe oberhalb der Dichtkanten der Lippendichtung liegt. Außerdem ist der Wulst durch die thermische Verformung nach dem Erkalten relativ hart. Es besteht daher die Gefahr, daß beim Einsetzen der Glasscheibe diese ausschließlich gegen die Wülste anliegt, nicht jedoch an die Dichtkante der Dichtlippen. In diesem Fall ist eine einwandfreie Abdichtung der Glasscheibe nicht gewährleistet. Außerdem besteht die Gefahr, daß die Glasscheibe im Bereich der Wülste bricht, wenn sie unter einem gewissen Druck gegen die Wülste punktweise zur Anlage gelangt.

Der Erfindung liegt daher die Aufgabe zugrunde, eine Vorrichtung zum Verschweißen Kunststoffprofilen, insbesondere für Fensterrahmen, zu schaffen, mit der die Verschweißstellen von innenliegenden Lippendichtungen in eine gewünschte Form gebracht werden.

Diese Aufgabe wird erfindungsgemäß gelöst durch die Merkmale des Anspruchs 1.

Bei der erfindungsgemäßen Vorrichtung ist an jedem Aggregat ein Druckstempel vorgesehen, der mittels einer Verstellvorrichtung gegen den zu verschweißenden Eckbereich von aneinanderstoßenden Lippendichtungen an der Innenseite der Profile andrückbar ist.Nach dem Fügen und Verschweißen der Kunststoffprofile und der zugehörigen Lippendichtungen wird der Druckstempel gegen den zu verschweißenden Bereich angedrückt. Das Material der Lippendichtungen ist noch angewärmt und kann daher durch ein geeignetes Profil des Druckstempels in gewünschter Weise verformt werden. Auf diese Weise wird vermieden, daß ein über die Dichtkanten der Dichtlippe überstehender Wulst gebildet wird. Außerdem sorgt die Verformung des Wulstes dafür, daß das Material auch nach dem Erkalten relativ weich und elastisch nachgebend ist, so daß die Dichtwirkung der Dichtlippen auch in diesem Bereich nicht beeinträchtigt ist.

Nach einer Ausgestaltung der Erfindung besteht der Druckstempel aus antihaftendem Material, vorzugsweise aus PTFE.

Nach einer anderen Ausgestaltung der Erfindung ist der Druckstempel lösbar in verstellbaren Positionen relativ zur Verstellachse der Vorrichtung anbringbar. Der Druckstempel kann mit einer entsprechenden Feder in einer Nut der Verstellvorrichtung aufgenommen und darin in einer gewünschten Verstellposition fixiert werden. Es versteht sich, daß je nach dem verwendeten Dichtungsprofil ein spezieller Druckstempel eingesetzt wird. Dieser hat eine dem Profil der Dichtung angepaßte Form, wobei außerhalb des Stoßbereiches die Kontur des Druckstempels zweckmäßigerweise Rippen aufweist, die zwischen benachbarten Dichtungslippen eingreifen.

Für die Ausbildung der Verstellvorrichtung sind verschiedene konstruktive Ausführungen denkbar. Eine besteht nach einer Ausgestaltung der Erfindung darin, daß der Druckstempel an einer von zwei Führungsstangen angebracht ist, die in einem Führungsblock geführt sind, der einen Verstellzylinder hält und der Führungsblock seinerseits mittels eines Verstellzylinders betätigbar ist, der am Aggregat angebracht ist. Die Führungsstangen sorgen dafür, daß der Druckstempel präzise und klemmfrei in die gewünschte Position gebracht werden kann. Zweckmäßigerweise ist der Führungsblock seinerseits an mindestens einer von zwei weiteren Führungsstangen angebracht, die ihrerseits in einem zweiten aggregatfesten Führungsblock geführt sind, der den zweiten Verstellzylinder hält.

Die Erfindung wird nachfolgend anhand von Zeichnungen näher erläutert.
- Fig. 1: zeigt die Draufsicht auf eine schematisch dargestellte Vorrichtung zum Verschweißen von Profilen aus Kunststoff.
- Fig. 2: zeigt die Draufsicht auf eine Eckverbindung von zwei Kunststoffprofilen für einen Fensterrahmen.
- Fig. 3: zeigt einen Schnitt durch die Darstellung nach Fig. 2 entlang der Linie 3-3.
- Fig. 4: zeigt eine Seitenansicht eines Druckstempels nach der Erfindung.
- Fig. 5: zeigt die Ansicht des Druckstempels nach Fig. 4 in Richtung Pfeil 5.
- Fig. 6: zeigt die Druntersicht des Druckstempels nach Fig. 4.
- Fig. 7: zeigt die Verstellvorrichtung für einen Druckstempel nach der Erfindung in Draufsicht.
- Fig. 8: zeigt die Seitenansicht der Verstellvorrichtung nach Fig. 7 in Richtung Pfeil 8.

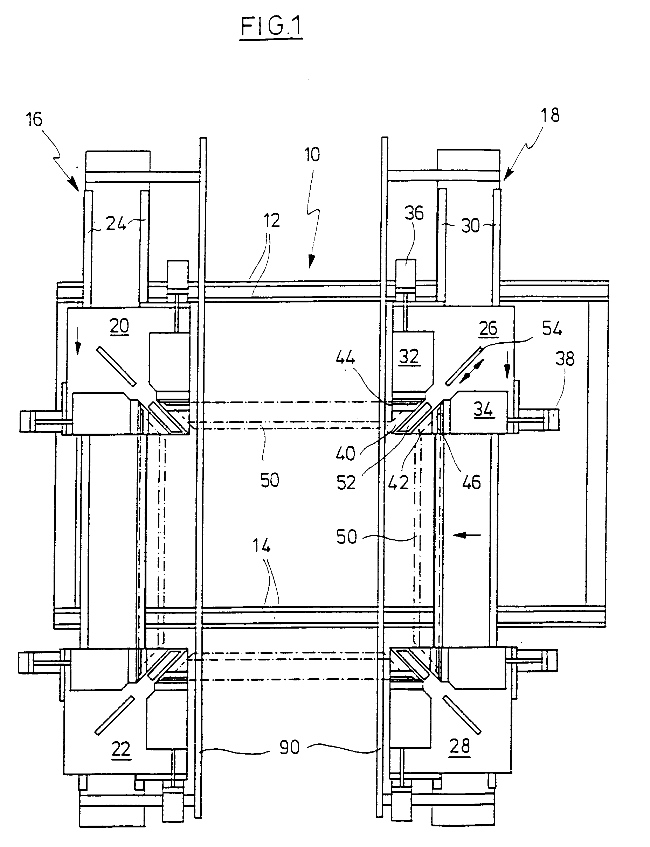

Die in Fig. 1 dargestellte Vorrichtung weist einen Grundrahmen 10 auf, der zwei parallel beabstandete Führungen 12, 14 aufweist. Auf dem Rahmen 10 ist stationär ein Aggregatträger 16 angeordnet. Er kann zum Beispiel auf den Führungen 12, 14 verstellt werden, hat jedoch hierfür keinen eigenen Antrieb und wird außerdem mit Hilfe geeigneter Mittel festgesetzt. Ein zweiter Aggregatträger 18 kann auf den Führungen 12, 14 senkrecht zum ersten Aggregatträger 16 verfahren werden. Der Antrieb hierfür ist nicht dargestellt.

Auf dem ersten Aggregatträger sind zwei Schweißaggregate 20, 22 angeordnet, von denen das Schweißaggregat 20 entlang von Führungen 24 gegenüber dem zweiten Aggregat 22 verstellbar ist. Der Verstellantrieb hierfür ist ebenfalls nicht dargestellt. Zwei weitere Schweißaggregate 26, 28 sind auf dem zweiten Aggregatträger 18 angeordnet. Das Schweißaggregat 28 ist stationär, während das Schweißaggregat 26 entlang von Führungen 30 gegenüber dem stationären Aggregat 28 verstellbar ist.

Der Aufbau der Schweißaggregate 20, 22, 26, 28 ist gleich. Daher soll bei den weiteren Betrachtungen lediglich das Schweißaggregat 26 berücksichtigt werden. Es weist zwei Schlitten 32, 34 auf, die mit Hilfe von Verstellzylindern 36, 38 entlang aufeinander senkrecht stehender Achsen verstellbar sind. Jeder Schlitten 32 bzw. 34 weist eine Auflage 40 bzw. 42 und ein Konterprofil 44 bzw. 46 auf, auf die bzw. gegen die die Enden der Profile gelegt werden, die strichpunktiert zum Beispiel bei 50 angedeutet sind. Oberhalb im Abstand zu den Auflagen 40, 42 bzw. den Konterprofilen 44,46 sind (nicht gezeigte) Druck- oder Spannplatten angeordnet, die mit Hilfe von Verstellzylindern vertikal verstellbar sind, um die Profile 50 gegen die Auflagen 40, 42 anzupressen.

Das Schweißaggregat 26 weist ferner ein Zentrierelement 52 auf, das mit Hilfe eines nicht gezeigten Verstellantriebs in der Höhe verstellt werden kann. Schließlich ist am Schweißaggregat ein längliches Heizelement 54 vorgesehen, das mit Hilfe eines nicht gezeigten Verstellantriebs in Richtung des Doppelpfeils verstellbar ist.

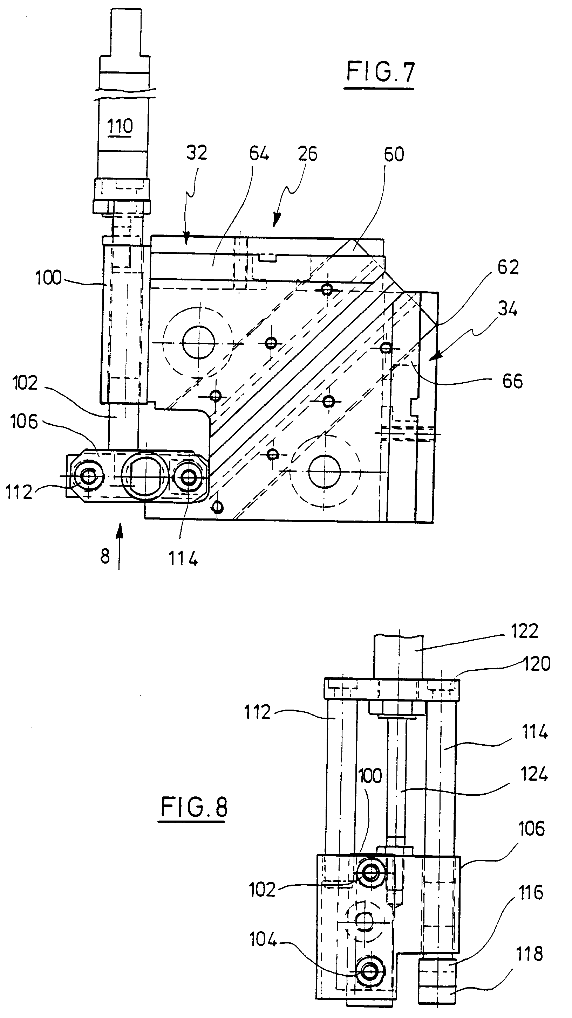

Wie aus Fig. 7 hervorgeht, ist am Schlitten 32 des Aggregats 26 ein Führungsblock 100 angebracht. Er lagert zwei Führungsstangen 102, 104 (Fig. 8), die an dem vorderen Ende mit einem weiteren Führungsblock 106 verbunden sind und die von einem Verstellzylinder 110 betätigbar sind. Der vom Verstellzylinder 110 verstellbare Führungsblock 106 führt zwei Führungsstangen 112, 114, von denen die Führungsstange 114 am unteren Ende eine Halterung 116 für einen Druckstempel 118 aufweist. Die Führungsstangen 112, 114 sind mit einer Platte 120 verbunden, an der ein weiterer Verstellzylinder 122 angebracht ist.Die Kolbenstange 124 des Verstellzylinders 122 ist mit dem Führungsblock 106 verbunden. Durch Betätigung des Verstellzylinders 122 wird mithin der Druckstempel 118 verstellt.

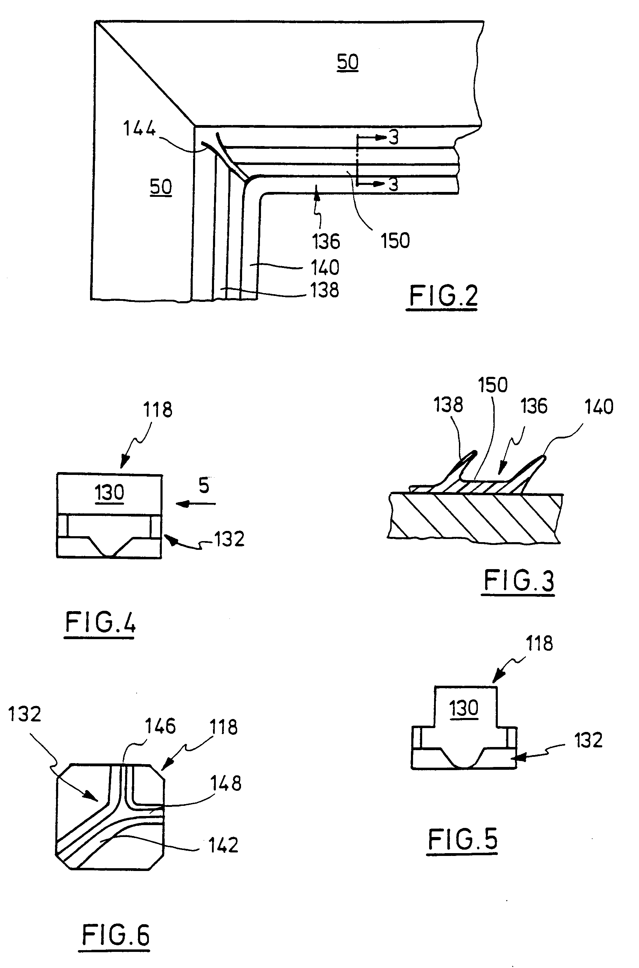

In den Figuren 4 bis 6 ist der Druckstempel 118 näher dargestellt. Er weist einen im Querschnitt rechteckigen leistenartigen Halteabschnitt 130 auf sowie den eigentlichen Stempelabschnitt 132. Wie aus der Druntersicht nach Fig. 6 hervorgeht, wird der Stempelabschnitt 132 im wesentlichen durch ein erhabenes Y gebildet. Der Druckstempel 118 besteht im übrigen aus PTFE, das antihaftend wirkt.

In Fig. 2 ist der Eckbereich eines Fensterrahmens aus den Kunststoffprofilen 50 zu erkennen. Die Profile 50 weisen an der Innenseite eine Lippendichtung 136 auf, die, wie aus Fig. 3 hervorgeht, aus zwei geneigten Lippen 138, 140 besteht.

Beim Verschweißen der Kunststoffprofile werden die Schlitten 32, 34 mit den Auflagen 40, 42, den Konterprofilen 44, 46 und den Spannplatten, welche die Kunststoffprofile 50 halten, gegeneinandergepreßt, nachdem die Enden mit Hilfe des Heizelements 54 erweicht worden sind. In Fig. 7 sind die Spannplatten bei 60, 62 zu erkennen sowie Halterungen 64, 66 für die Konterprofile. In Fig. 7 ist im übrigen die Schweiß- und Fügeposition der Vorrichtung nach Fig. 1 dargestellt. Nachdem die Profile mit den Dichtlippenanordnungen 136 gegeneinandergepreßt und verschweißt sind, wird der Verstellzylinder 122 betätigt, um den Druckstempel zu betätigen und gegen die Lippendichtung 136 zu führen. Der Druckstempel 118 verformt dabei den verschweißten Bereich der Lippendichtung 136. Zu diesem Zweck wird der Steg 142 in den Schweißwulst der Dichtlippen 138 gepreßt, so daß sich eine Verformung wie bei 144 angedeutet ergibt. Die Stege oder Rippen 146 bzw. 148 liegen dabei in dem freien Bereich oder der Nut 150 zwischen den Dichtlippen 138, 140.

Anschließend wird der Druckstempel 118 zurückgezogen und die Schlitten 32, 34 werden so betätigt, daß der Fensterrahmen anschließend auf ein Förderband 90 (Fig. 1) zum Abtransport abgelegt werden kann.

Es wurde eine Schweißvorrichtung beschrieben, bei der jedes Aggregat zwei Schlitten aufweist. Es versteht sich, daß ein Druckstempel mit Betätigungsvorrichtung auch bei einem Schweißaggregat mit nur einem verstellbaren Schlitten angewendet werden kann. In diesem Fall sind dann Spannplatte, Konterprofil und Auflage in der Horizontalen stationär.

Mit dem leistenartigen Halteabschnitt kann der Druckstempel 118 in seiner Lage im Halter an der Führungsstange 114 in der Horizontalen verstellt werden.

## Patentansprüche

1. Vorrichtung zum Verschweißen von Profilen aus Kunststoff,insbesondere für Fensterrahmen, mit vier Schweißaggregaten, von denen jeweils zwei auf einem von zwei parallelen Aggregatträgern angeordnet sind, wobei jeweils ein Aggregat eines Paares relativ zum anderen auf dem Aggregatträger verstellbar ist und ein Aggregatträger relativ zum anderen Aggregatträger verstellbar ist, wobei ferner jedes Aggregat zwei Auflagen, zwei Konterprofile und zwei Druckplatten für die Enden der jeweils eingelegten Profile aufweist, die mittels eines Vorschubschlittens relativ zueinander verstellbar sind, dadurch gekennzeichnet, daß an jedem Aggregat (20, 22, 26, 28) ein Druckstempel (118) vorgesehen ist, der mittels einer Verstellvorrichtung (122) gegen den zu verschweißenden Eckbereich von aneinanderstoßenden Lippendichtungen (136) an der Innenseite der Profile (50) andrückbar ist.

2. Vorrichtung nach Anspruch 1, dadurch gekennzeichnet, daß der Druckstempel (118) aus antihaftendem Material besteht, vorzugsweise aus PTFE.

3. Vorrichtung nach Anspruch 1 oder 2, dadurch gekennzeichnet, daß der Druckstempel (118) lösbar in verstellbaren Positionen relativ zur Verstellachse der Verstellvorrichtung (112) anbringbar ist.

4. Vorrichtung nach einem der Ansprüche 1 bis 3, dadurch gekennzeichnet, daß der Druckstempel (118) ein Profil aufweist, das dem Eckbereich aneinanderstoßender Lippendichtungen (136) entspricht.

5. Vorrichtung nach einem der Ansprüche 1 bis 4, dadurch gekennzeichnet, daß die Verstellvorrichtung (122) mit der Halterung (64) für ein Konterprofil verbunden ist.

6. Vorrichtung nach einem der Ansprüche 1 bis 5, dadurch gekennzeichnet, daß der Druckstempel (118) an einer von zwei Führungsstangen (112, 114) angebracht ist, die in einem Führungsblock (106) geführt sind, der einen Verstellzylinder (122) hält und der Führungsblock (106) seinerseits mittels eines Verstellzylinders (110) betätigbar ist, der am Aggregat (26) angebracht ist.

7. Vorrichtung nach Anspruch 6, dadurch gekennzeichnet, daß der Führungsblock (106) an mindestens einer von zwei weiteren Führungsstangen (102, 104) angebracht ist, die ihrerseits in einem aggregatfesten Führungsblock (100) geführt sind, der den zweiten Verstellzylinder (110) hält.
